# EUROPEAN PATENT APPLICATION

(11) **EP 2 011 731 A1**
(43) Date of publication of application: **07.01.2009**
(21) Application number: 08006153.4
(22) Date of filing: 28.03.2008
(51) Int. Cl.: B62M 25/08, B62J 6/18

(54) **Instrumentation kit of a bicycle and bicycle comprising such kit**

(30) Priority: 06.07.2007 IT MI20071352
(71) Applicant: CAMPAGNOLO S.r.l., 36100 Vicenza (VI) (IT)
(72) Inventor: Dal Pra' Guiseppe, 36010 Zané VI (IT)
(74) Representative: Castiglia, Paolo

(57) **Abstract**

An instrumentation kit (10) of a bicycle comprises a bundle of cables (25, 25', 25", 25"') for electrically connecting a first electronic component (40, 40', 45, 50, 55) of the kit to a second electronic component (40, 40', 45, 50, 55) of the kit, the cables of the bundle being cut off to form a first bundle portion (25a, 25a', 25a", 25a"') and a second bundle portion (25b, 25b', 25b", 25b"'). The first bundle portion (25a, 25a', 25a", 25a"') and the second bundle portion (25b, 25b', 25b", 25b"') are connectible to each other through a common connector (30, 30', 30", 30"').

A bicycle comprising the instrumentation kit (10), a bottle holder and a containment box for an electronic component of the instrumentation kit (10) are also described.

## Description

The present invention refers to an instrumentation kit of a bicycle. In particular, the invention refers to an instrumentation kit comprising at least two electronic components, typically part of an on-board computer of the bicycle, electrically connected to each other through at least one cable.

The term "electronic component" should be taken in the wider sense to include, amongst other things, a battery, a switch, a display, an actuator, any circuit board, a control unit, etc.

The invention further refers to a bicycle on which the aforementioned instrumentation kit is installed, to a bottle holder of such a bicycle, and to a containment box for an electronic component of such a kit.

In the field of high-performance bicycles it is becoming common practice to use on-board computers, through which it is possible to detect, and possibly also display, information on the operating state of the bicycle and/or interact with equipments thereof, such as for example the front and/or rear derailleur to manage gearshifting.

Up to now, instrument-equipped bicycles are made by equipping conventional bicycles with the necessary electronic components and relative electrical connection cables. This operation has numerous difficulties, since a conventional bicycle is not generally set up to house the aforementioned electronic components and connection cables.

Moreover, when arranged on the outside, the electrical cables can easily be damaged, as well as being bad-looking.

Patent application EP 1 698 546 suggests to arrange the electrical cables inside the frame of the bicycle, and to split each of them into two portions connected with each other through male and female terminals crimped at their ends. Each connection is then made impermeable by applying a sheath of heat-shrinking material on the outside of the terminals. Thanks to the fact that the connections are located between two cable portions, they are in a position that allow them as well to be housed in the frame and therefore hidden from view.

However, these connections are difficult to make, also running the risk of swapping the cable portions to be connected. Moreover, the terminals do not make a stable link between them upon their connection, but they are kept together only by the heat-shrinking sheath. Consequently, if the heat-shrinking sheath is applied to the cable with the terminals not correctly in contact with each other, or else the terminals part from each other during the application of the sheath, the connection is not realized or it is realized defectively. In this case, the only solution is to break the connections of all the cables until the defective one is found and then restore them.

The technical problem underlying the present invention is therefore to provide a system for cabling electronic components of an instrument-equipped bicycle that safeguards the appearance and the integrity of the cables and of the connections, but at the same time is quick and easy to apply and reliable.

In a first aspect thereof, the invention therefore refers to an instrumentation kit of a bicycle comprising a bundle of cables for electrically connecting a first electronic component of the kit to a second electronic component of the kit, the cables of the bundle being cut off to form a first bundle portion and a second bundle portion, characterised in that said first bundle portion and said second bundle portion are connectible to each other through a common connector.

Thanks to the fact that the connector is located between two portions of the bundle of cables and not at an end of the bundle, it can be housed in the frame together with the cables and at the same time the connection procedure is substantially simplified since there is a single connector for a plurality of cables that are part of the bundle. In this way, the connection can also be carried out by unqualified staff in any bicycle shop, without the risk of confusing cables. Moreover, given that the terminations of the cable portions are held in the same connector, they do not hinder the insertion movement of the bundles of cables in the frame, as instead happens for the free terminations of the prior art.

Preferably, the common connector comprises a first connector element associated with the first bundle portion and a second connector element associated with the second bundle portion and said first and second connector element being adapted to be coupled to each other in a single coupling configuration.

Advantageously, assembly is thus further speeded up because it is not necessary to carry out connection tests.

In a preferred embodiment of the instrumentation kit of the invention at least one of said first and second electronic component of the kit is electrically connected to a third electronic component of the kit through a further bundle of cables.

Preferably, also said further bundle of cables is cut off to form a first bundle portion and a second bundle portion, which can be connected together through a common connector.

Preferably, the first bundle portion of said bundle of cables and the first bundle portion of said further bundle of cables are both associated with said first connector element and the second bundle portion of said bundle of cables and the second bundle portion of said further bundle of cables are respectively associated with two distinct second connector elements.

Preferably, said two distinct second connector elements are suitable for being coupled with said first connector element in a single coupling configuration.

In an embodiment of the instrumentation kit of the invention said bundle of cables is fixedly connected to at least one of said first and second electronic component of the kit.

In an alternative embodiment of the instrumentation kit of the invention, said bundle of cables is removably connectible to at least one of said first and second electronic component of the kit.

Preferably, said common connector is adapted to form a *per se* stable connection.

In this way it is always ensured that the connection is effective, even without auxiliary means for holding the parts of the connector, like a heat-shrinking sheath, or before they are applied.

Preferably, said common connector is of a non-impermeable type, i.e. it does not have its own sealing structure against the wet.

In this way the size of the connector is smaller than a corresponding impermeable connector. Advantageously, it is thus possible to make holes in the frame that are not very invasive for the passage of the cables and the connectors, so that the structural strength of the bicycle remains high. This provision is possible because the frame of the bicycle is a low-humidity environment and a low impermeability of the connector is thus sufficient.

Preferably, said bundle of cables comprises from two to twenty-four cables, more preferably from two to seven cables.

Preferably, each cable of said first and second bundle of cables is covered by a respective first insulating sheath.

Preferably, said first and second bundle portion are wrapped in a respective second insulating sheath.

In a preferred embodiment of the invention, the instrumentation kit comprises a third insulating sheath that covers said common connector when said first and second bundle portion are connected.

Advantageously, the third insulating sheath allows a non-impermeable connector to be made impermeable, without any appreciable increase in its cross-section.

Preferably, the third insulating sheath overlaps with said first or second insulating sheath for at least a portion of said first and second bundle portion close to said common connector, or vice-versa.

Advantageously, this avoids humidity penetrating at the sections of the cable portions or cable bundle portions close to the connector, where the first and/or second insulating sheath can have been partially removed to allow the attachment of the connector to the cable, and reaching from here the electronic components.

Preferably, the second insulating sheath completely covers the third insulating sheath.

Preferably, the third insulating sheath is made of a heat-shrinking material.

Advantageously, the use of such a material ensures that a substantially complete adhesion of the third insulating sheath to the connector and to the sections adjacent of said first and second bundle portion is obtained in a simple way.

Preferably, a fourth insulating sheath completely covers said first and second bundle portion connected by the common connector and the common connector.

Preferably, said first or second or fourth insulating sheath is made of a polymeric material having a Shore A hardness between about 5 and 40, more preferably between about 10 and 20.

Advantageously, insulating sheaths having such characteristics are relatively soft and help in avoiding disturbing noises deriving from possible impacts of the bundles of cables housed inside the bicycle caused by vibrations during use.

Preferably, the polymeric material is a silicon-based material.

Preferably, the first, second, third or fourth insulating sheath have a thickness between about 0.1 and 1 mm.

Preferably, the maximum size at a cross-section of said common connector covered by one or more insulating sheaths is between about 5 and about 7 mm.

In an embodiment of the instrumentation kit of the invention at least one of said first and second bundle portion is fixedly connected to a respective component of said first and second electronic component.

In this embodiment at least one of said first and second bundle portion is connected to a respective component of said two electronic components through welding or crimping.

In an alternative embodiment of the instrumentation kit of the invention at least one of said first and second bundle portion is removably connectible to a respective component of said first and second electronic component.

Advantageously, even when the instrumentation kit is installed on a bicycle, this allows the aforementioned electronic component to be freely disconnected and removed, for example to download data stored in it, or else in view of it temporarily not being in use, for repair or replacement, without needing to also remove the bundle portion connected to the electronic component.

In the aforementioned alternative embodiment, at least one of said first and second bundle portion is connectible to a respective component of said first and second electronic component through at least one terminal board or at least one connector.

More preferably, said at least one connector is a connector of an impermeable type.

The choice of a connector of an impermeable type is in this case advantageous since the connector that connects a bundle portion to a respective electronic component is normally arranged outside the bicycle, close to or even, in some cases, partially integrated with the electronic component and therefore it is directly exposed to atmospheric agents.

Preferably, said first and second connector elements comprise respective engagement elements adapted to cooperate to lock the connector in the configuration in which said first and second bundle portion are connected together.

Advantageously, the engagement means make it possible to make a stable and secure connection between the first and the second connector element, avoiding their accidental disconnection, in particular during the application operations of an insulating sheath onto it.

More preferably, one of the first and the second connector element comprises a tooth and the other comprises a seat suitable for,receiving said tooth.

Preferably, said bundle of cables comprises a section exceeding the length required to connect said first and second electronic component when installed on said bicycle.

Preferably, said common connector is associated with said bundle of cables at said exceeding section.

Advantageously, the exceeding section allows the connection of the first and second bundle portion, and possibly the application of an insulating sheath on the connector, in a comfortable position, outside of the bicycle, and a subsequent insertion thereof inside the bicycle.

Preferably, the instrumentation kit comprises a collecting space provided to house said exceeding section of the bundle of cables.

Preferably, the collecting space comprises at least one separator element adapted to separate a plurality of bundles of cables housed in the space from each other.

In an embodiment of the instrumentation kit of the invention, the collecting space is defined at a bottle holder of the bicycle.

Preferably, the collecting space is integrated in said bottle holder.

More preferably, the bottle holder comprises a base support portion and a side support portion intended to be fixed to the frame of the bicycle, and the collecting space is defined in said side support portion.

Advantageously, with this arrangement a wall portion of the frame is used to close the collecting space upon mounting of the bottle holder on the bicycle.

In order to ensure the tight seal of the collecting space, the bottle holder preferably comprises a tight seal gasket associated with said side support portion at a peripheral edge of the collecting space.

Preferably, the base support portion of the bottle holder comprises a space adapted to receive an electronic component of said first and second electronic component.

More preferably, such an electronic component is a control unit.

Preferably, the base support portion of the bottle holder is tightly sealed at at least one of its sides through a removable cover.

Preferably, the aforementioned electronic component is provided with a power supply unit and the power supply unit is associated with the removable cover.

These aspects advantageously allow a bicycle to be equipped with the instrumentation kit of the invention in a simple manner and with a minimum impact upon the structural and aesthetic characteristics of the bicycle. At the same time, it is ensured that a user or operator has a very easy access to the main components of the kit for the maintenance or removal thereof.

In another embodiment of the instrumentation kit of the invention the collecting space can be defined at the frame of the bicycle.

In a further embodiment of the instrumentation kit of the invention the collecting space can be defined at the handlebars of the bicycle.

In a further embodiment of the instrumentation kit of the invention the collecting space can be defined at a seat post of the bicycle.

In a further embodiment of the instrumentation kit of the invention the collecting space can be associated with one of the aforementioned two electronic components.

Preferably, said first and second electronic component comprise a control unit and a display of an on-board computer of said bicycle.

Preferably, said control unit comprises a logic unit and a power unit for controlling actuators.

In an embodiment thereof, the instrumentation kit of the invention comprises a first bundle of cables to electrically connect the control unit and the display and said first bundle of cables is fixedly connected to the control unit and to the display.

In an alternative embodiment of the instrumentation kit of the invention, said first bundle of cables can be removably connected to at least one of said control unit and said display.

Advantageously, as already stated above in more general terms, a removable connection allows the control unit and/or the display to be quickly and easily disconnected to be able to remove them at any time even after the installation of the instrumentation kit on the bicycle, without this requiring the removal of portions of bundles of cables or of other electronic components of the instrumentation kit.

Preferably, in this alternative embodiment, the first bundle of cables is connectible to at least one of the control unit and the display through a connector of an impermeable type.

Preferably, the first bundle of cables comprises at least five cables.

Preferably, the instrumentation kit further comprises a second bundle of cables to electrically connect at least one actuator of an equipment of said bicycle to said control unit and said second bundle of cables is cut off by a common connector to form two bundle portions connectible to each other through the connector.

Preferably, the instrumentation kit further comprises a third bundle of cables to electrically connect at least one second actuator of a second equipment of said bicycle to said control unit, in which said third bundle of cables is cut off by a common connector to form two bundle portions connectible to each other through the connector.

Preferably, the second and the third bundle of cables are cut off by the same common connector.

Preferably, such a common connector comprises a first connector element arranged as termination of two bundle portions and two second connector elements connectible to the first connector element each arranged as termination of a bundle portion.

Preferably, the second and/or third bundle of cables comprises at least six cables.

Preferably, the instrumentation kit further comprises a fourth bundle of cables to electrically connect at least one switch associated with a respective command device of the bicycle to said display.

Preferably, the instrumentation kit further comprises a fifth bundle of cables to electrically connect at least one second switch associated with a respective command device of the bicycle to said display.

Preferably, said fourth and fifth bundle of cables each comprise at least two cables, at least one of which is a ground cable intended to carry a reference signal.

In an embodiment of the instrumentation kit of the invention, the fourth and fifth bundle of cables are fixedly connected to the display.

In an alternative embodiment, the fourth and fifth bundle of cables are removably connectible to said display.

Preferably, in this alternative embodiment, the fourth and fifth bundle of cables are connectible to the display through a connector of an impermeable type.

Irrespective of the type of connection, the ground cables preferably connect to each other inside the display.

Preferably, each of said fourth and fifth bundle of cables is cut off by a common connector to form two bundle portions connectible to each other through such a common connector.

Advantageously, this allows the switches to be quickly and simply disconnected to remove them at any time even after installation of the instrumentation kit on the bicycle, without this requiring the removal of the respective portions of bundle of cables or of other electronic components of the instrumentation kit.

In a second aspect thereof, the invention refers to a bicycle comprising an instrumentation kit according to the invention.

Preferably, such a bicycle, individually or in combination, has all of the structural and functional characteristics discussed above with reference to the instrumentation kit of the invention and therefore has all of the aforementioned advantages.

In particular, one or more of the bundles of cables of the instrumentation kit are preferably at least partially housed inside a component of the bicycle.

Preferably, the common connectors that connect respective portions of said bundles of cables are also housed inside a component of the bicycle.

In an embodiment of the bicycle of the invention, the component of the bicycle is a bottle holder.

In another embodiment of the bicycle of the invention, the component of the bicycle is the frame.

In a further embodiment of the bicycle of the invention, the component of the bicycle is the handlebars.

In a further embodiment of the bicycle of the invention, the component of the bicycle is a seat post.

Preferably, one or more of the bundles of cables of the instrumentation kit are immobilised inside the aforementioned component of the bicycle through mechanical fastening means.

Alternatively, the immobilisation can be obtained through gluing substances or foaming substances.

In this way, irrespective of the specific immobilisation method, the bundles of cables of the instrumentation kit are advantageously prevented from producing disturbing noises further to their impacts inside of components of the bicycle.

In a third aspect thereof, the invention refers to a bottle holder of a bicycle provided with an instrumentation kit comprising a bundle of cables for electrically connecting a first and second electronic component of the instrumentation kit, said bottle holder comprising a base support portion and a side support portion intended to be fixed to the frame of said bicycle, characterised in that said side support portion comprises a collecting space adapted to receive at least one portion of said bundle of cables.

Preferably, the bottle holder comprises a tight seal gasket associated with said side support portion at a peripheral edge of said collecting space.

Preferably, the base support portion of the bottle holder comprises a space adapted to receive an electronic component of said first and second electronic component of the instrumentation kit.

More preferably, said electronic component is a control unit.

Preferably, the base support portion of the bottle holder is tightly sealed at at least one of its sides through a removable cover.

Preferably, said electronic component comprises a power supply unit and such a power supply unit is associated with the removable cover.

In a fourth aspect thereof, the invention refers to a containment box for at least one electronic component of an instrumentation kit of a bicycle comprising a box-shaped element and a removable cover, wherein a tight seal gasket is arranged between the removable cover and the box-shaped element.

Preferably, the removable cover is associated with a power supply unit of the instrumentation kit.

Preferably, the containment box comprises a second box-shaped element forming a space for containing at least one second component of the instrumentation kit.

Preferably, the second box-shaped element has an opening defined by an outer peripheral edge having a shape such as to fit to a tube of a frame of said bicycle.

Preferably, the containment box comprises a gasket at said outer peripheral edge such as to make a tight seal between the outer peripheral edge and the tube of the frame.

Further characteristics and advantages of the present invention shall become clearer from the following detailed description of some preferred embodiments thereof, made with reference to the attached drawings. In such drawings:
- figure 1 is a schematic view of a bicycle comprising an instrumentation kit according to the present invention;
- figure 2 is a schematic representation of an instrumentation kit according to the present invention;
- figure 3 is an enlarged schematic view of two portions of a bundle of cables connected through a common connector of the instrumentation kit of figure 2;
- figures 4-7 are schematic representations of respective alternative embodiments of the instrumentation kit of figure 2;
- figure 8 is a schematic enlarged perspective view of two portions of a bundle of cables comprising a common connector of the instrumentation kit of figure 2, which shows the connector in an unconnected configuration;
- figure 9 is a schematic exploded perspective view of a bottle holder that can be used on the bicycle of figure 1, and
- figures 10 and 11 are schematic enlarged views of the two portions of bundle of cables of figure 3, which show possible mutual arrangements of insulating sheaths of the bundle portions and of the common connector according to the present invention.

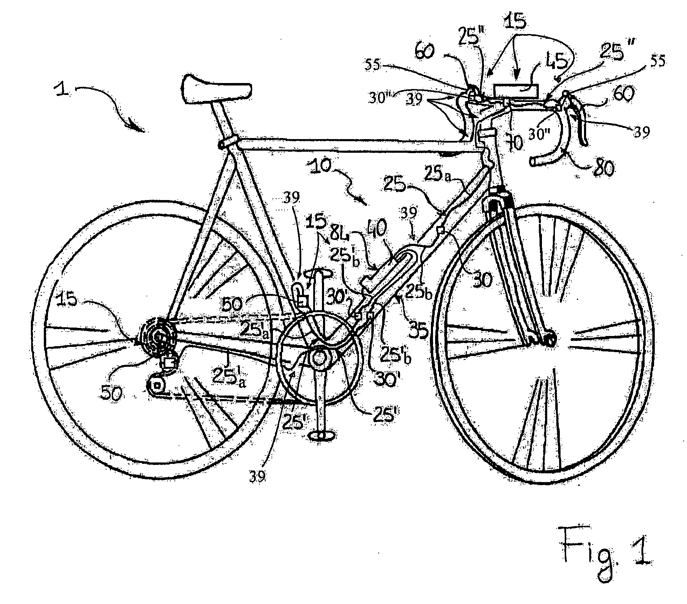

In figure 1, a bicycle on which an instrumentation kit 10 according to the present invention is mounted is wholly indicated with reference numeral 1.

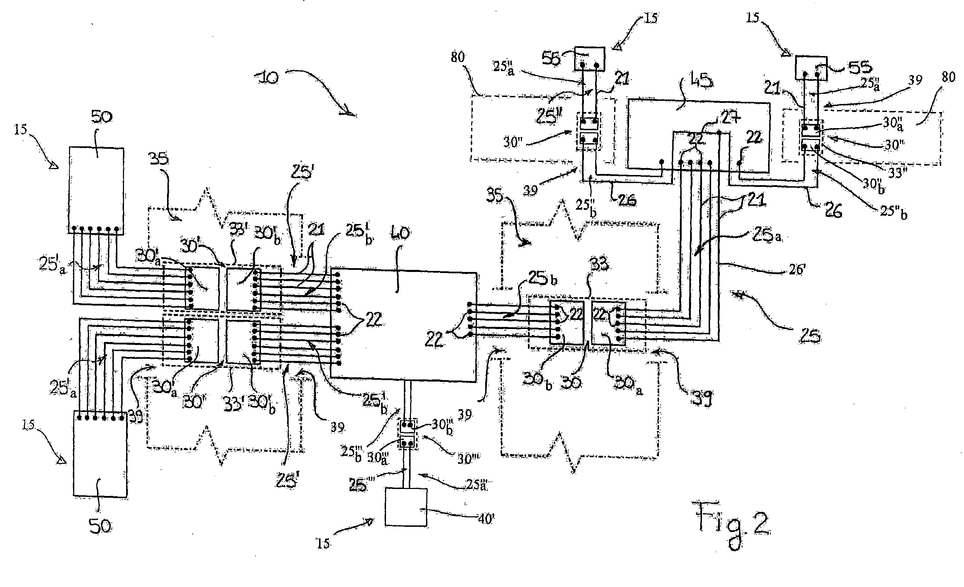

In general, the instrumentation kit 10 comprises a plurality of electronic components 15 electrically connected two by two through cables 21. The plurality of cables 21 connecting two electronic components is hereafter referred to as a bundle of cables, for the sake of simplicity. In figure 2 six bundles of cables 25, 25', 25", 25"' are represented. The cables 21 of each bundle of cables 25, 25', 25", 25"' can be cut off by a respective common connector 30, 30', 30", 30"' to form two bundle portions 25a, 25b, 25a', 25b', 25a", 25b", 25a"', 25b"'. Such connectors are preferably of a non-impermeable type.

The connectors and the bundles of cables for at least a section of the respective lengths are housed inside components of the bicycle 1, such as for example the frame 35, the handlebars 80, a seat post or a bottle holder.

In figure 2 a first preferred embodiment of the instrumentation kit 10 is represented. The electronic components 15 in this case comprise a control unit 40 and a display 45, for example forming part of an on-board computer of the bicycle 1, a pair of actuators 50 to respectively actuate the front and rear derailleur (not shown in detail in the figures) of the bicycle 1, a pair of switches 55 associated with command devices 60 (figure 1) arranged on the handlebars of the bicycle 1, and a battery 40'.

When the cyclist gives a gearshifting order by acting upon the command devices 60, the switches 55 emit an electrical signal that is transmitted to the control unit 40, which in turn commands the actuators 50 to carry out gearshifting.

The display 45 and the control unit 40 are electrically connected through a first bundle of cables 25, preferably comprising at least five cables 21. The bundle of cables 25 is divided into two bundle portions 25a and 25b connectible through a first connector 30 common to all of the cables of the bundle 25. The connector 30 is of a non-impermeable type and in the mounted configuration of the instrumentation kit 10 it is inserted inside a component of the bicycle 1, in particular the frame 35. The bundle of cables 25 passes into the frame 35 thanks to inlet and outlet holes 39.

In the embodiment of figure 2 the bundle portions 25a and 25b of the bundle of cables 25 are fixedly connected to the control unit 40 and to the display 45. In particular, each cable 21 of the bundle portions 25a and 25b is connected to such components at respective connection points 22 obtained through welding, crimping or another fastening method known to the man skilled in the art.

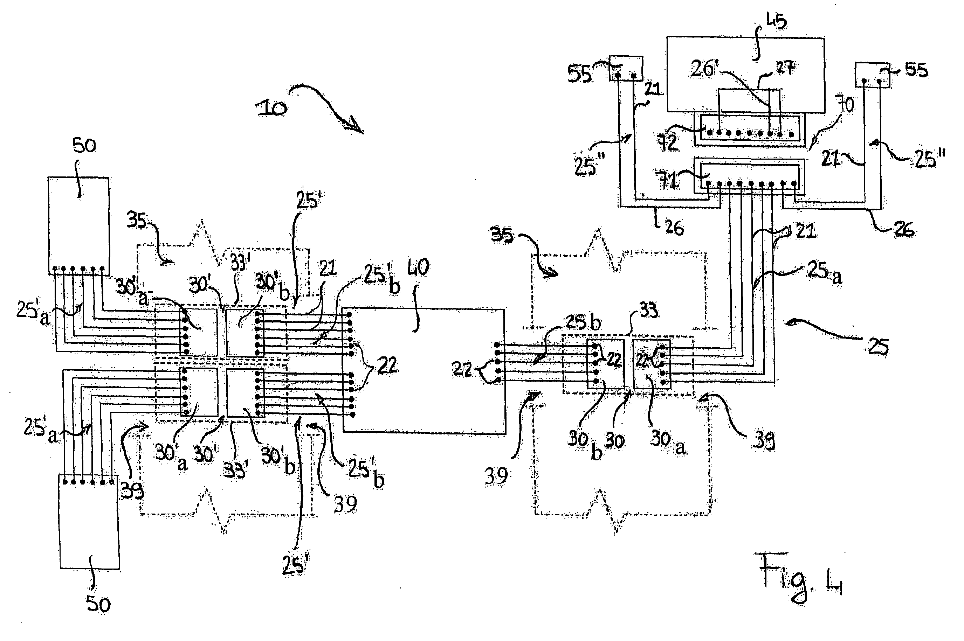

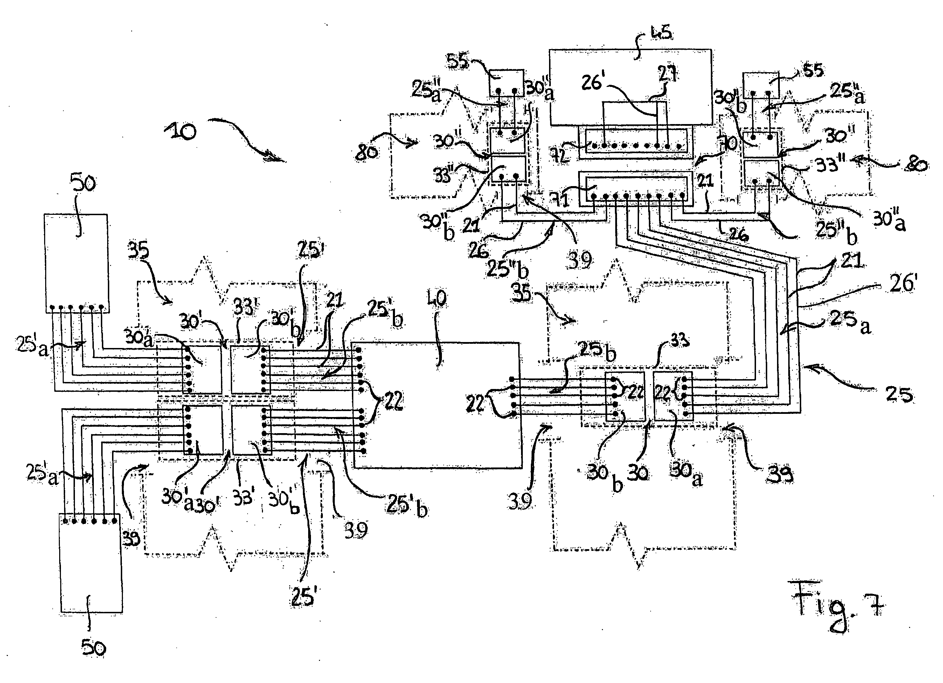

In alternative embodiments (figures 4-7) the bundle of cables 25 can be removably connected to the display 45, through a connector 70 comprising a first connector element 71 associated with the bundle of cables 25 and a second connector element 72 associated with the display 45. The connector 70, being typically positioned outside of the bicycle 1, is preferably of an impermeable type.

The connector 30 comprises a first connector element 30b, for example a male element, and a second connector element 30a, for example a female element. The cables 21 of the bundle portions 25a and 25b are preferably fixedly connected to the connector elements 30b and 30a at respective connection points 22 obtained according to one of the fastening methods cited above.

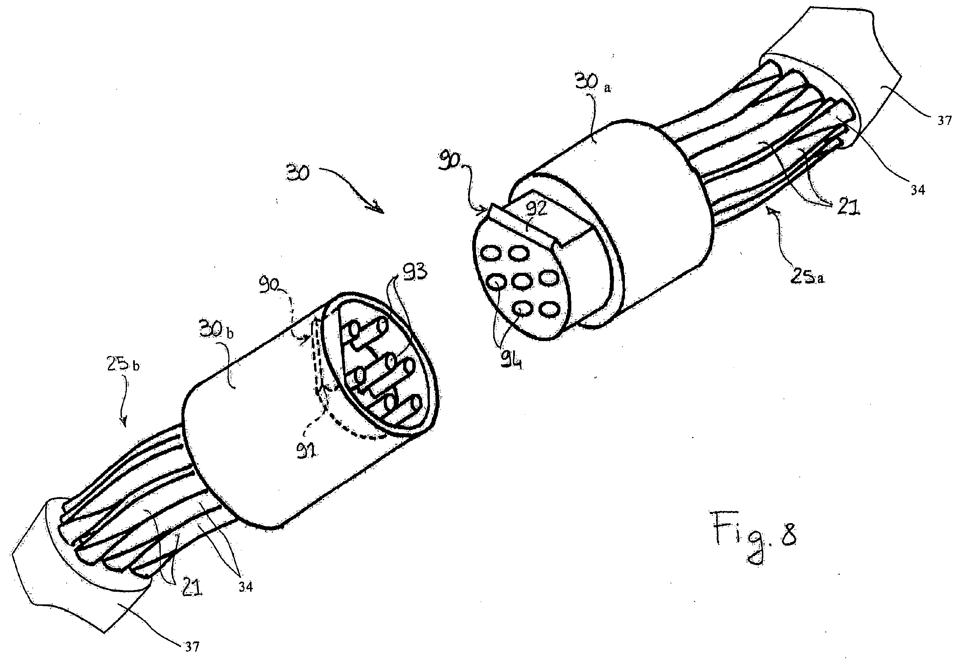

As shown in detail in figure 8, the first and the second connector element 30b and 30a are configured so as to allow a single coupling configuration, so that each portion of a cable 21 in the bundle portion 25b connected to the first connector element 30b can be connected only to the corresponding portion of a cable 21 in the bundle portion 25a connected to the second connector element 30a. In particular, each connector 30 has (figure 8) a plurality of pins 93 at the first connector element 30b and a corresponding plurality of sockets 94 at the second connector element 30a. A portion of a cable 21 is connected to each pin 93 and socket 94. Upon connection, thanks to the configuration of the first and second connector element 30b and 30a that allows a single mutual coupling position, each pin 93 inserts into a single and predetermined socket 94, so that the correct electrical connection between corresponding portions of cables 21 of the two bundle portions 25a and 25b is ensured.

Figure 8 shows, as an example, a connector 30 having seven poles, i.e. with seven pins 93 and seven sockets 94. Typically, the number of poles corresponds to the number of cables 21 forming the bundle of cables 25. However, it is also possible to use a connector 30 with a number of poles greater than the number of cables 21 in the bundle of cables 25, where the excess poles are not connected to any cable 21.

As shown again in figure 8, the first and second connector element 30b and 30a comprise respective engagement elements 90 adapted to cooperate with each other to lock the connector elements 30b and 30a in their connected configuration. Purely as an example, in figure 8 the first connector element 30b comprises a seat 91 adapted to cooperate with a tooth 92 formed at the second connector element 30a. In general, any locking system that requires a minimum predetermined force to separate the connector elements 30b and 30a can be considered for the present invention. An alternative solution to the one described is, for example, that of making pins 93 and sockets 94 configured so as to require a predetermined force to couple them with each other.

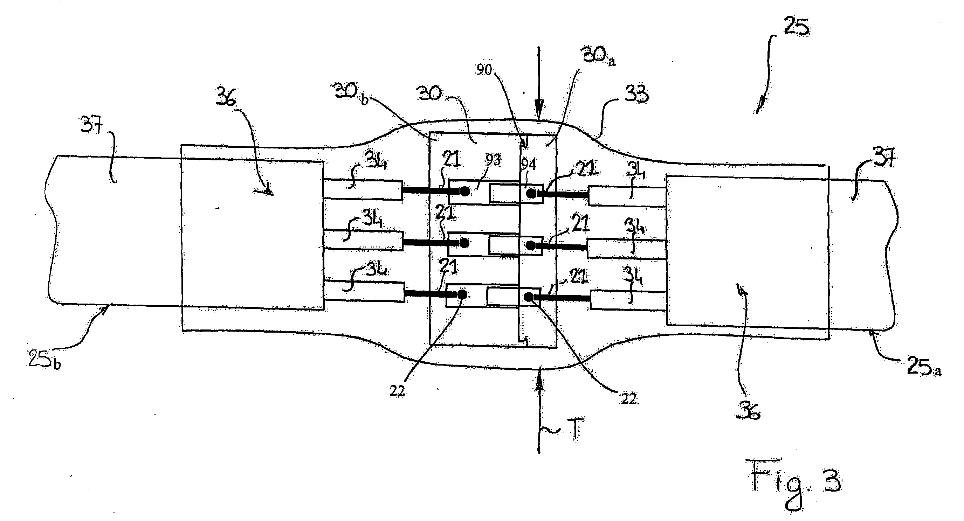

As can be seen from figure 3, which schematically shows the detail of two bundle portions 25a and 25b connected through the connector 30, each cable 21 is covered by a respective insulating sheath 34, and the cables 21 thus covered are in turn wholly covered by an insulating sheath 37 to respectively form the bundle portions 25a and 25b of the bundle of cables 25.

The connector 30, which is of a non-impermeable type as stated above, is made impermeable through the application of an insulating sheath 33. The insulating sheath 33 is applied so as to fully cover the connector 30 and possible parts of cables 21 bared for the connection to the connector 30, and further so as to overlap with the insulating sheath 37 at sections 36 adjacent to the connector 30. The overlapping with the insulating sheath 37 prevents humidity from penetrating inside the bundle portions 25 at the connection and from thus reaching the electronic components connected thereto.

The insulating sheath 33 is preferably made of a heat-shrinking material, which, when subjected to heating, shrinks making the outer insulating sheath 33 perfectly adhere to the connector 30 and to the sections 36 of the bundle portions 25a and 25b.

The thickness of the insulating sheaths 34 and 37 and of the outer insulating sheath 33 is preferably between about 0,1 and about 1 mm.

The maximum size T at a cross-section of the connector 30 coated by the outer insulating sheath 33 is preferably between about 5 and about 7 mm.

It should be observed that although figure 3 shows, as an example, bundle portions 25 respectively comprising 3 cables 21, what has been explained is independent of the number of cables 21 in the bundle portions 25a and 25b.

Coming back to the scheme of figure 2, between each of the actuators 50 and the control unit 40 an electrical connection similar to the one described above with reference to the electrical connection between display 45 and control unit 40 is provided. In particular, each of the actuators 50 is connected to the control unit 40 respectively through a second and a third bundle of cables 25', each preferably comprising at least six cables 21. Each bundle of cables 25' is divided into two bundle portions 25a' and 25b' connectible to each other through a common connector 30', of a non-impermeable type. Each connector 30' comprises a respective first connector element 30b' and a respective second connector element 30a' and, in the connected configuration, is covered by an outer insulating sheath 33' made of heat-shrinking material, in a way totally similar to that described above with reference to the outer insulating sheath 33.

Also in this case the connectors 30' and at least a section of the bundles of cables 25' are housed inside a component of the bicycle 1, in particular the frame 35, by means of inlet and outlet holes 39.

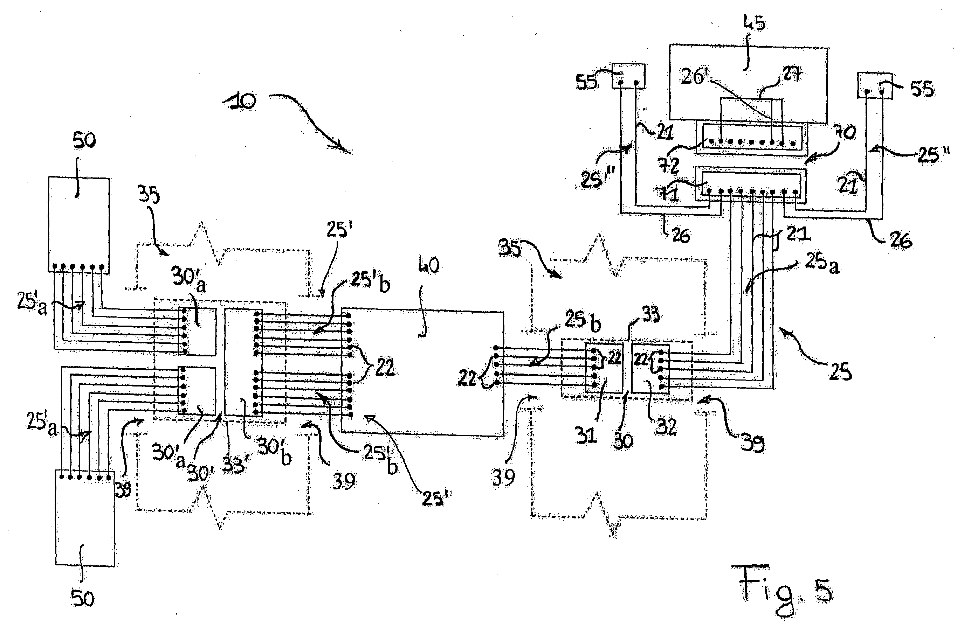

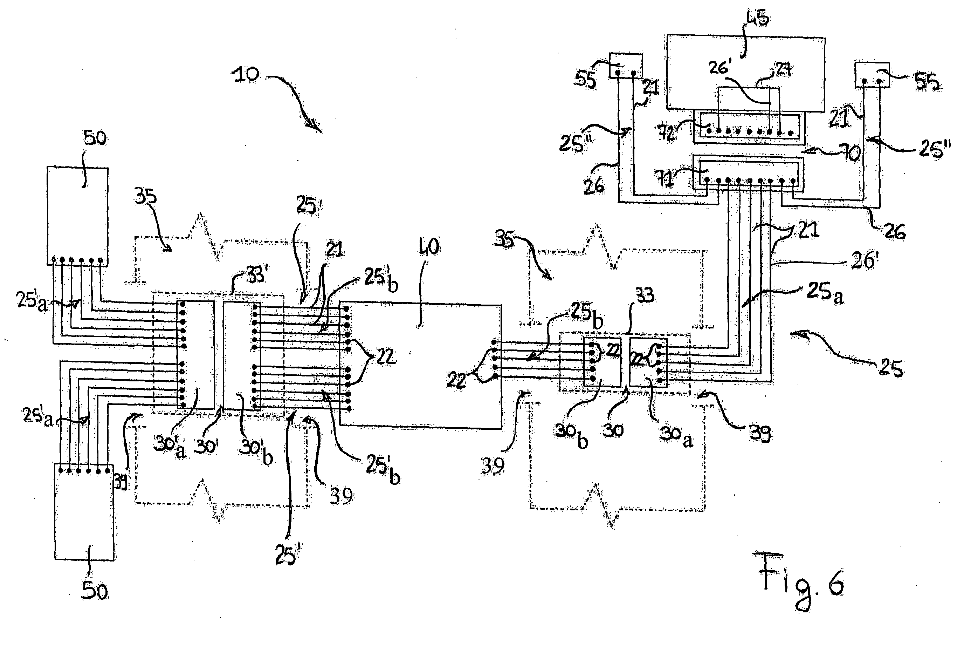

In alternative embodiments (figure 5 and 6) the respective bundle portions 25a' and 25b' of the bundles of cables 25' are connected to each other through a connector 30' having at least one connector element shared between two bundle portions 25a' or 25b'. For example, figure 5 shows an embodiment of the instrumentation kit 1 in which both of the bundle portions 25b' of the two bundles 25', each comprising six portions of cables 21, is connected to the control unit 40 and to a connector element 30b', for example of the female type, shared between both of the bundle portions 25b'. The two bundle portions 25a', each comprising six cable portions 21, are connected to respective connector elements 30a', for example of the male type, and to respective actuators 50. Both of the male connector elements 30a' are connected to the single female connector 30b'. In figure 6 also the two bundle portions 25a' are connected to a connector element 30a' shared between both of such portions.

Again with reference to the scheme of figure 2, each switch 55 is connected to the display 45 respectively through a fourth and a fifth bundle of cables 25". Each bundle of cables 25" preferably comprises at least two cables 21, one of which is a ground cable, indicated with reference numeral 26, intended to carry a reference signal. The ground cables 26 connect to each other and to a ground cable 26' of the bundle of cables 25 preferably inside the display 45, as schematically illustrated by the connection 27.

In the embodiment of figure 2 the bundles of cables 25" are fixedly connected both to the switches 55 and to the display 45 at connection points 22 obtained according to the methods described above. The bundles of cables 25" are also preferably, but not limitingly, cut off by a respective common connector 30" to form respective bundle portions 25a" 25b" connectible to each other through the connectors 30". Each connector 30", is preferably of a non-impermeable type and is made impermeable through the application of an outer insulating sheath 33", in a way totally similar to that described above with reference to the connectors 30 and 30'. The connectors 30" are preferably inserted inside a component of the bicycle 1, in particular in the handlebars 80, again thanks to holes 39.

In alternative embodiments (figures 4-7) the bundles of cables 25" are removably connectible to the display 45. Preferably, in this case, the connection is made by using the same connector 70 that connects the bundle of cables 25 to the display 45. Also in these embodiments the ground cables 26 connect to each other inside the display 45 through a connection 27 suitably arranged between terminals of the connector element 72 associated with the display 45.

The control unit 40 preferably comprises a logic unit of the instrumentation kit 10 and a power unit that powers and controls the actuators. The control unit can itself contain a battery or power supply unit 40' or else, as illustrated in figure 2, it can be connected to it through a sixth bundle of cables 25"', in which case the power supply unit 40' can also be located at a different position away from the control unit 40. The bundle of cables 25"' is also preferably divided into two bundle portions 25a"' and 25b"' by a common connector 30"', comprising two connector elements 30a"' and 30b"'.

Preferably, in each of the described embodiments some or all of the bundles of cables 25, 25', 25" and 25"' have a length greater than the length corresponding to the path that they must follow inside the bicycle 1 to connect the respective electronic components 15 with which they are associated. The exceeding sections of the bundles make it possible to operate on the connectors 30, 30', 30" and 30"' easily outside of the bicycle 1 and, in the mounted configuration of the instrumentation kit 10, they can be housed in suitable collecting spaces. Such collecting spaces can be defined at components of the bicycle 1, such as, for example, the frame 35, the handlebars 80, a seat post or a bottle holder, or else they can be associated with one or more of the electronic components 15 of the instrumentation kit 10, such as, for example, the display 45 or the actuators 50.

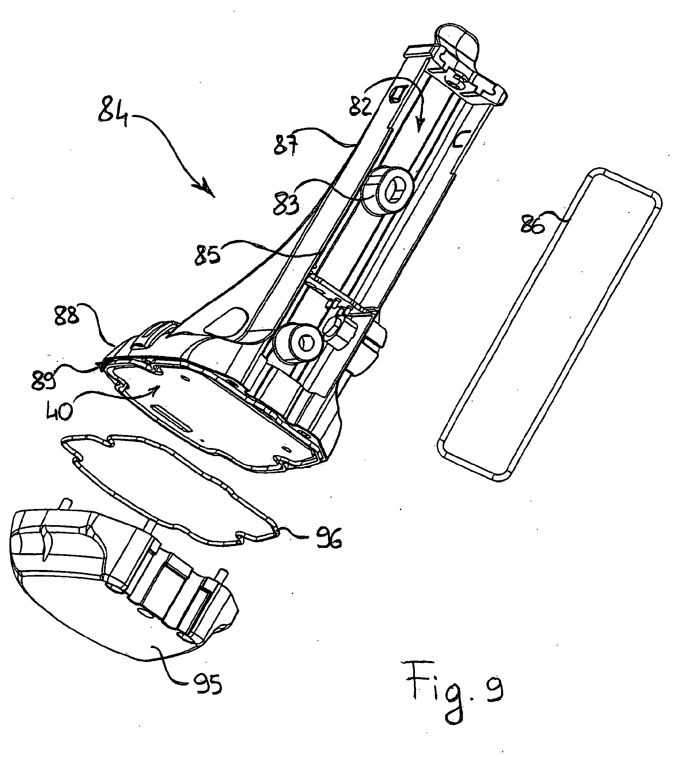

In a preferred embodiment of the instrumentation kit 10 of the invention, it is provided to define a collecting space 82 in a support of the control unit 40, in turn integrated in a bottle holder 84, illustrated in figure 9.

The bottle holder 84 comprises a side support portion 87 of a bottle and a base support portion 88 of the bottle, preferably substantially perpendicular to each other and made in a single piece.

The collecting space 82 is defined in the side support portion 87 and comprises an appropriately sized cavity in which there is at least one separator element 83 of the bundles of cables 25, 25' and possibly 25"', so that the latter can be kept inside the collecting space 82 without twisting around one another.

The collecting space 82 has an opening delimited by a peripheral edge 85 of the side support portion 87. The latter is intended to be fixed to the frame 35 of the bicycle 1 according to methods known to a man skilled in the art, so that when the bottle holder 84 is mounted on the bicycle 1, the frame closes the opening of the collecting space 82 and prevents the bundles of cables from coming out. At the peripheral edge 85 a gasket 86 is preferably arranged, so as to make the collecting space 82 tight sealed. Thanks to this, if necessary, it is also possible to receive the connectors 30 and 30' and possibly 30"' in the collecting space 82, instead of in the frame 35.

The base support portion 88 comprises a space 89 adapted to receive the control unit 40. The space 89 is preferably closed through a removable cover 95. A gasket 96 ensures the tight seal of the cover 95. A power supply unit of the control unit 40 is preferably associated with the removable cover 95.

Irrespective of its arrangement, the size of the collecting space 82 is preferably such as to allow the exceeding sections of the bundles of cables to be completely received and immobilised, so that such exceeding sections do not have to be housed in the frame 35, where, being looser, they would produce noise due to impacts against the walls.

In any case, special systems for immobilising the bundles of cables 25, 25' and 25" even inside the frame 35 can be considered. Such systems provides for the use of mechanical fastening means, the use of gluing substances applied to the inner walls of the frame 35 or else the use of foaming substances introduced inside the frame 35. In the case of gluing substances, it is possible to use either non-setting glues, so that the bundles of cables can be removed by applying a sufficient force to overcome the viscosity, or setting glues, so that the bundles of cables definitively stick to the frame. The bundles of cables 25" can be immobilised in the handlebars in the same way.

As an alternative to the use of the aforementioned immobilisation systems, it is possible to use insulating sheaths 34 for the cables 21, or 37 for the bundles of cables 25, 25', 25" and 25"' made from a polymeric material with a Shore A hardness lower than that of the insulating sheaths for common electrical cables, and preferably between about 5 and about 40, more preferably between 10 and 20. In this way, even if a cable or a bundle of cables impacts against the walls of the frame 35, it does not generate noise.

Preferred polymeric materials for this purpose are silicon-based materials.

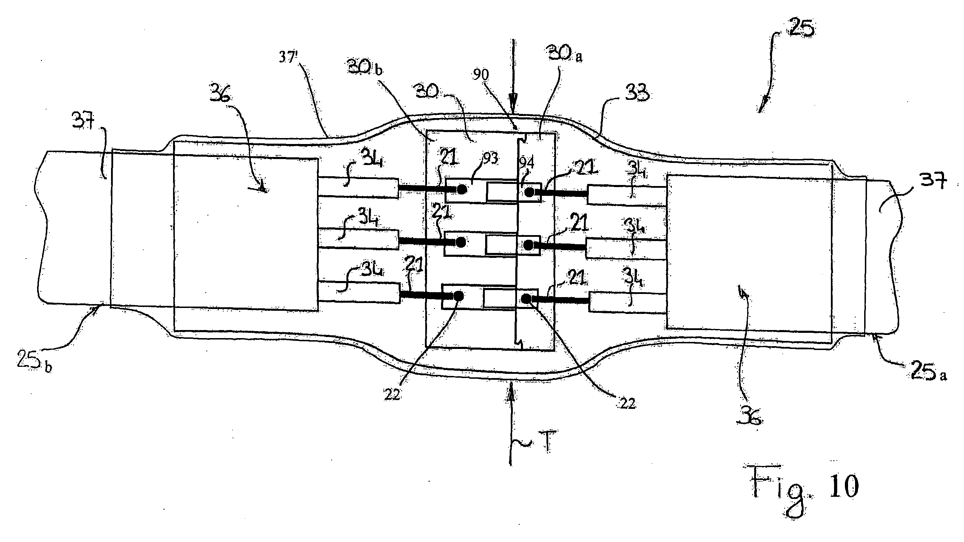

As shown in figure 10, which refers as an example to the connector 30, also the connectors 30, 30', 30" and 30"' can be covered by an insulating sheath with a low Shore A hardness. In particular, it is possible to use the same insulating sheath 37 as that of the bundle portions 25a and 25b connected through the connector 30, either in the form of an extension of the portion of insulating sheath that covers the cables 21, or in the form of a distinct portion of an insulating sheath 37'. In this case, the aforementioned thickness T also comprises the insulating sheath 37'.

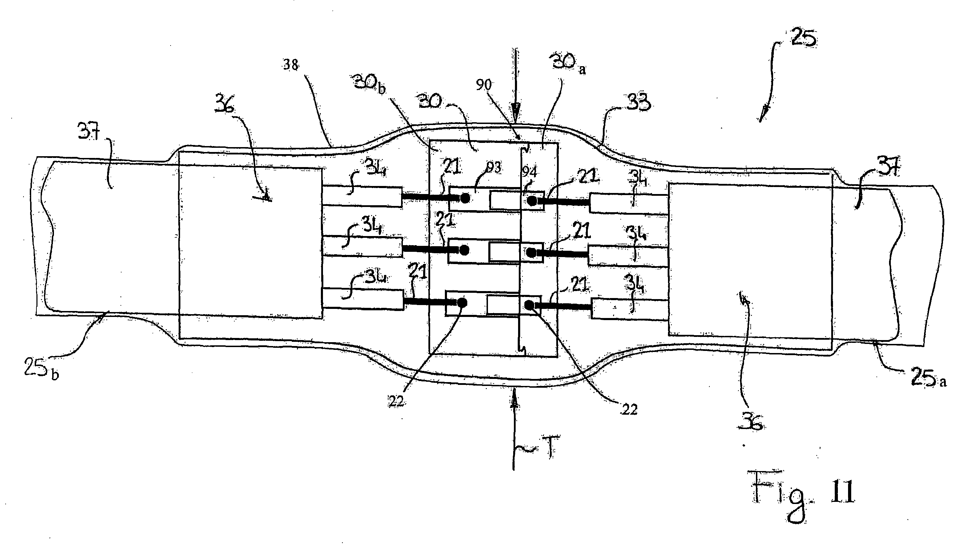

Alternatively, as shown in figure 11, a fourth sheath 38 of polymeric material with low Shore A hardness is used to cover the entire bundle 25, thus also wrapping around the connector 30.

As to the form of the connectors 30, 30', 30", 30"', just one example has been illustrated in figure 8, in which in particular the connections of the various cables 21 are arranged in parallel with each other. However, the form of the connector is not limiting for the purposes of the present invention and can be varied, for example by adopting a form with connections between the various cables 21 arranged in series with each other, as illustrated in patent US 6,634,896, herein incorporated here by reference.

A man skilled in the art shall recognise that it is possible to combine the various characteristics of the embodiments described above to obtain further embodiments, all of which fall anyhow within the scope of the present invention as defined by the subsequent claims.

## Claims

1. Instrumentation kit (10) of a bicycle (1) comprising a bundle of cables (25, 25', 25", 25"') for electrically connecting a first electronic component (15; 40, 40', 45, 50, 55) of the kit to a second electronic component (15; 40, 40', 45, 50, 55) of the kit, the cables of the bundle being cut off to form a first bundle portion (25a, 25a', 25a", 25a"') and a second bundle portion (25b, 25b', 25b", 25b"'), **characterised in that** said first bundle portion (25a, 25a', 25a", 25a"') and said second bundle portion (25b, 25b', 25b", 25b"') are connectible to each other through a common connector (30, 30', 30", 30"').

2. Instrumentation kit (10) according to claim 1, wherein said common connector (30, 30', 30", 30"') comprises a first connector element (30a, 30a', 30a", 30a"') associated with said first bundle portion (25a, 25a', 25a", 25a"') and a second connector element (30b, 30b', 30b", 30b"') associated with said second bundle portion (25b, 25b', 25b", 25b"'), said first (30a, 30a', 30a", 30a"') and second (30b, 30b', 30b", 30b"') connector element being adapted to be coupled to each other in a single coupling configuration.

3. Instrumentation kit (10) according to claim 1, wherein at least one of said first and second electronic component (15; 40, 40', 45, 50, 55) of the kit is electrically connected to a third electronic component (15; 40, 40', 45, 50, 55) of the kit through a further bundle of cables (25, 25', 25", 25"').

4. Instrumentation kit (10) according to claim 3, wherein said further bundle of cables (25, 25', 25", 25"') is cut off to form a first bundle portion (25a, 25a', 25a", 25a"') and a second bundle portion (25b, 25b', 25b", 25b"'), said first bundle portion (25a, 25a', 25a", 25a"') and said second bundle portion (25b, 25b', 25b", 25b"') being connectible to each other through a common connector (30, 30', 30", 30"').

5. Instrumentation kit (10) according to claim 4 when dependent on claim 2, wherein said first bundle portion (25a, 25a', 25a", 25a"') of said bundle of cables (25, 25', 25", 25"') and said first bundle portion (25a, 25a', 25a", 25a"') of said further bundle of cables (25, 25', 25", 25"') are both associated with said first connector element (30a, 30a', 30a", 30a"'), and wherein said second bundle portion (25b, 25b', 25b", 25b"') of said bundle of cables (25, 25', 25", 25"') and said second bundle portion (25b, 25b', 25b", 25b"') of said further bundle of cables (25, 25', 25", 25"') are respectively associated with two distinct second connector elements (30b, 30b', 30b", 30b"').

6. Instrumentation kit (10) according to claim 5, wherein said two distinct second connector elements (30b, 30b', 30b", 30b"') are adapted to be coupled with said first connector element (30a, 30a', 30a", 30a"') in a single coupling configuration.

7. Instrumentation kit (10) according to any one of the previous claims, wherein said bundle of cables (25, 25', 25", 25"') is fixedly connected to at least one of said first and second electronic component (15; 40, 40', 45, 50, 55) of the kit.

8. Instrumentation kit (10) according to any one of claims 1 to 6, wherein said bundle of cables (25, 25', 25", 25"') is removably connectible to at least one of said first and second electronic component (15; 40, 40', 45, 50, 55) of the kit.

9. Instrumentation kit (10) according to any one of the previous claims, wherein said common connector (30, 30', 30", 30"') is adapted to form a *per se* stable connection.

10. Instrumentation kit (10) according to any one of the previous claims, wherein said common connector (30, 30', 30", 30"') is of a non-impermeable type.

11. Instrumentation kit (10) according to any one of the previous claims, wherein said bundle of cables (25, 25', 25", 25"') comprises from two to twenty-four cables (21).

12. Instrumentation kit (10) according to any one of the previous claims, wherein each cable (21) of said first and second bundle of cables (25, 25', 25", 25"') is covered by a respective first insulating sheath (34).

13. Instrumentation kit (10) according to any one of the previous claims, wherein said first and second bundle portion (25a, 25b; 25a', 25b'; 25a", 25b"; 25a"', 25b"') are wrapped in a respective second insulating sheath (37, 37').

14. Instrumentation kit (10) according to any one of the previous claims, comprising a third insulating sheath (33, 33', 33") covering said common connector (30, 30', 30") when said first and second bundle portion (25a, 25b; 25a', 25b'; 25a", 25b" ; 25a"', 25b"') are connected.

15. Instrumentation kit (10) according to claim 14, wherein said third insulating sheath (33, 33', 33") overlaps with said first or second insulating sheath (34, 37) for at least a portion (36) of said first and second bundle portion (25a, 25b; 25a', 25b'; 25a", 25b" ; 25a"', 25b"') close to said common connector (30, 30', 30"), or vice-versa.

16. Instrumentation kit (10) according to claim 15, wherein said second insulating sheath (37, 37') completely covers said third insulating sheath (33, 33', 33").

17. Instrumentation kit (10) according to any one of claims 14 to 16, wherein said third insulating sheath (33, 33', 33") is made of a heat-shrinking material.

18. Instrumentation kit (10) according to any one of the previous claims, wherein a fourth insulating sheath (38) completely covers said first and second bundle portion (25a, 25b; 25a', 25b'; 25a", 25b"; 25a"', 25b"') connected by the common connector (30, 30', 30", 30"') and said common connector (30, 30', 30", 30"').

19. Instrumentation kit (10) according to any one of claims 12 to 18, wherein said first or second or fourth insulating sheath (34, 37, 37', 38) is made of a polymeric material having a Shore A hardness between about 5 and 40.

20. Instrumentation kit (10) according to claim 19, wherein said polymeric material has a Shore A hardness between about 10 and 20.

21. Instrumentation kit (10) according to claim 19 or 20, wherein said polymeric material is a silicon-based material.

22. Instrumentation kit (10) according to any one of claims 12 to 21, wherein said first, second, third or fourth insulating sheath (33, 33', 33", 34, 37, 37', 38) have a thickness between about 0.1 and 1 mm.

23. Instrumentation kit (10) according to any one of claims 12 to 22, wherein the maximum size (T) at a cross-section of said common connector (30, 30', 30") covered by one or more insulating sheaths (33, 33', 33", 37', 38) is between about 5 and 7 mm.

24. Instrumentation kit (10) according to any one of the previous claims, wherein at least one of said first and second bundle portion (25a, 25b; 25a', 25b'; 25a", 25b"; 25a"', 25b"') is fixedly connected to a respective component of said first and second electronic component (15; 40, 40', 45, 50, 55).

25. Instrumentation kit (10) according to claim 24, wherein at least one of said first and second bundle portion (25a, 25b; 25a', 25b'; 25a", 25b"; 25a"', 25b"') is connected to a respective component of said first and second electronic component (15; 40, 40', 45, 50, 55) through welding or crimping.

26. Instrumentation kit (10) according to any one of claims 1 to 23, wherein at least one of said first and second bundle portion (25a, 25b; 25a', 25b'; 25a", 25b"; 25a"', 25b"') is removably connectible to a respective component of said first and second electronic component (15; 40, 40', 45, 50, 55).

27. Instrumentation kit (10) according to claim 26, wherein at least one of said first and second bundle portion (25a, 25b; 25a', 25b' ; 25a" , 25b" ; 25a"', 25b"') is connectible to a respective component of said first and second electronic component (15; 40, 45, 50, 55) through at least one terminal board or at least one connector (70).

28. Instrumentation kit (10) according to claim 27, wherein said at least one connector (70) is a connector of an impermeable type.

29. Instrumentation kit (10) according to claim 2, wherein said first and second connector element (30b, 30b', 30b"; 30a, 30a', 30a") comprise respective engagement elements (90) adapted to cooperate to lock said connector (30, 30', 30", 30"') in the configuration in which said first and second bundle portion (25a, 25b; 25a', 25b'; 25a", 25b" ; 25a"', 25b"') are connected to each other.

30. Instrumentation kit (10) according to claim 29, wherein one of said first and second connector element (30b, 30b', 30b''; 30a, 30a', 30a") comprises a tooth (92) and the other comprises a seat (91) adapted to receive said tooth (92).

31. Instrumentation kit (10) according to any one of the previous claims, wherein said bundle of cables (25, 25', 25", 25"') comprises a section exceeding the length required to connect said first and second electronic component (15; 40, 40', 45, 50, 55) when installed on said bicycle (1).

32. Instrumentation kit (10) according to claim 31, wherein said common connector (30, 30', 30") is associated with said bundle of cables (25, 25', 25", 25"') at said exceeding section.

33. Instrumentation kit (10) according to claim 31 or 32, comprising a collecting space (82) provided to house said exceeding section of said bundle of cables (25, 25', 25", 25"').

34. Instrumentation kit (10) according to claim 33, wherein said collecting space (82) comprises at least one separator element (83) adapted to separate a plurality of bundles of cables (25, 25', 25", 25"') housed in the space from each other.

35. Instrumentation kit (10) according to any one of claims 32 to 34, wherein said collecting space (82) is defined at a bottle holder (84) of said bicycle (1).

36. Instrumentation kit (10) according to claim 35, wherein said collecting space (82) is integrated in said bottle holder (84).

37. Instrumentation kit (10) according to claim 35 or 36, wherein said bottle holder (84) comprises a base support portion (88) and a side support portion (87) intended to be fixed to the frame (35) of said bicycle (1), and said collecting space (82) is defined in said side support portion (87).

38. Instrumentation kit (10) according to claim 37, wherein said bottle holder (84) comprises a tight seal gasket (86) associated with said side support portion (87) at a peripheral edge (85) of said collecting space (82).

39. Instrumentation kit (10) according to claim 37 or 38, wherein said base support portion (88) comprises a space (89) adapted to receive an electronic component of said first and second electronic component (15; 40, 40', 45, 50, 55).

40. Instrumentation kit (10) according to claim 39, wherein said electronic component is a control unit (40).

41. Instrumentation kit (10) according to claim 39 or 40, wherein said base support portion (88) of the bottle holder (84) is tightly sealed at at least one of its sides through a removable cover (95).

42. Instrumentation kit (10) according to claim 41, wherein said electronic component is provided with a power supply unit and said power supply unit is associated with said removable cover (95).

43. Instrumentation kit (10) according to claim 33 or 34, wherein said collecting space (82) is defined at the frame (35) of said bicycle (1).

44. Instrumentation kit (10) according to claim 33 or 34, wherein said collecting space (82) is defined at the handlebars (80) of said bicycle (1).

45. Instrumentation kit (10) according to claim 33 or 34, wherein said collecting space (82) is defined at a seat post of said bicycle (1).

46. Instrumentation kit (10) according to one of claims 33 or 34, wherein said collecting space (82) is associated with one of said two electronic components (15; 40, 40', 45, 50, 55).

47. Instrumentation kit according to any one of the previous claims, wherein said first and second electronic component (15; 40, 40', 45, 50, 55) comprise a control unit (40) and a display (45) of an on-board computer of said bicycle (1).

48. Instrumentation kit according to claim 47, wherein said control unit comprises a logic unit and a power unit for controlling the actuators.

49. Instrumentation kit (10) according to claim 47, comprising a first bundle of cables (25) to electrically connect said control unit (40) and said display (45), wherein said first bundle of cables (25) is fixedly connected to said control unit (40) and to said display (45).

50. Instrumentation kit (10) according to claim 47, comprising a first bundle of cables (25) to electrically connect said control unit (40) and said display (45), wherein said first bundle of cables (25) is removably connectible to at least one of said control unit (40) and said display (45).

51. Instrumentation kit (10) according to claim 50, wherein said first bundle of cables (25) is connectible to at least one of said control unit (40) and said display (45) through a connector (70) of an impermeable type.

52. Instrumentation kit (10) according to any one of claims 49 to 51, wherein said first bundle of cables (25) comprises at least five cables (21).

53. Instrumentation kit (10) according to any one of claims 49 to 51, further comprising a second bundle of cables (25') to electrically connect at least one actuator (50) of an equipment of said bicycle (1) to said control unit (40), wherein said second bundle of cables is cut off by a common connector (30') to form two bundle portions (25a', 25b') connectible to each other through the connector (30').

54. Instrumentation kit (10) according to claim 53, further comprising a third bundle of cables (25') to electrically connect at least one second actuator (50) of a second equipment of said bicycle (1) to said control unit (40), wherein said third bundle of cables is cut off by a common connector (30') to form two bundle portions (25a', 25b') connectible to each other through the connector (30').

55. Instrumentation kit (10) according to claim 54, wherein the second and third bundle of cables are cut off by the same common connector (30').

56. Instrumentation kit (10) according to claim 55, wherein the common connector (30') comprises a first connector element (30b') arranged as termination of two bundle portions (25b') and two second connector elements (30a') connectible to the first connector element (30b') each arranged as termination of a bundle portion (25a').

57. Instrumentation kit (10) according to any one of claims 54 to 56, wherein said second and/or third bundle of cables (25') comprise at least six cables (21).

58. Instrumentation kit (10) according to any one of claims 53 to 57, further comprising a fourth bundle of cables (25") to electrically connect at least one switch (55) associated with a respective command device (60) of said bicycle (1) to said display (45).

59. Instrumentation kit (10) according to claim 58, further comprising a fifth bundle of cables (25") to electrically connect at least one second switch (55) associated with a respective command device (60) of said bicycle (1) to said display (45).

60. Instrumentation kit according to claim 59, wherein said fourth and fifth bundle of cables (25") each comprise at least two cables (21, 26), at least one of which is a ground cable (26) intended to carry a reference signal.

61. Instrumentation kit (10) according to claim 59, wherein said fourth and fifth bundle of cables (25") are fixedly connected to said display (45).

62. Instrumentation kit (10) according to claim 59, wherein said fourth and fifth bundle of cables (25") are removably connectible to said visual display (45).

63. Instrumentation kit (10) according to claim 62, wherein said fourth and fifth bundle of cables (25") are connectible to said display (45) through a connector (70) of an impermeable type.

64. Instrumentation kit (10) according to claim 60, wherein said ground cables (26) connect to each other inside said display (45).

65. Instrumentation kit (10) according to any one of claims 59 to 64, wherein each of said fourth and fifth bundle of cables (25") is cut off by a common connector (30") to form two bundle portions (25a", 25b") connectible to each other through the common connector (30").

66. Bicycle (1) comprising an instrumentation kit (10) according to any one of the previous claims.

67. Bicycle (1) according to claim 66, wherein said bundle of cables (25, 25', 25", 25"') of said instrumentation kit (10) is at least partially housed inside a component of the bicycle (1).

68. Bicycle (1) according to claim 66 or 67, wherein said common connector (30, 30', 30", 30"') is housed inside a component of the bicycle (1).

69. Bicycle (1) according to claim 67 or 68, wherein said component of the bicycle (1) is a bottle holder (84).

70. Bicycle (1) according to claim 67 or 68, wherein said component of the bicycle (1) is the frame (35).

71. Bicycle (1) according to claim 67 or 68, wherein said component of the bicycle (1) is the handlebars (80).

72. Bicycle (1) according to claim 67 or 68, wherein said component of the bicycle (1) is a seat post.

73. Bicycle (1) according to any one of claims 66 to 72, wherein said bundle of cables (25, 25', 25", 25"') is immobilised inside said component of the bicycle (1) through mechanical fastening means.

74. Bicycle (1) according to any one of claims 66 to 72, wherein said bundle of cables (25, 25', 25", 25"') is immobilised inside said component of the bicycle (1) through gluing substances.

75. Bicycle (1) according to any one of claims 66 to 72, wherein said bundle of cables (25, 25', 25", 25"') is immobilised inside said component of the bicycle (1) through foaming substances.

76. Bottle holder (84) of a bicycle (1) provided with an instrumentation kit (10) comprising a bundle of cables (25, 25', 25", 25"') for electrically connecting a first and a second electronic component (15; 40, 40', 45, 50, 55) of the instrumentation kit (10), said bottle holder (84) comprising a base support portion (88) and a side support portion (87) intended to be fixed to the frame of said bicycle (1), **characterised in that** said side support portion (87) comprises a collecting space (82) adapted to receive at least one portion of said bundle of cables (25, 25', 25", 25"').

77. Bottle holder (84) according to claim 76, comprising a tight seal gasket (86) associated with said side support portion (87) at a peripheral edge (85) of said collecting space (82).

78. Bottle holder (84) according to claim 76 or 77, wherein said base support portion (88) comprises a space (89) adapted to receive an electronic component of said first and second electronic component (15; 40, 40', 45, 50, 55).

79. Bottle holder (84) according to claim 78, wherein said electronic component is a control unit (40).

80. Bottle holder (84) according to any one of claims 76 to 79, wherein said base support portion (88) is tightly sealed at at least one of its sides through a removable cover (95).

81. Bottle holder (84) according to claim 80, wherein said electronic component comprises a power supply unit and said power supply unit is associated with said removable cover (95).

82. Containment box for at least one electronic component (15; 40, 40', 45, 50, 55) of an instrumentation kit (10) of a bicycle (1) comprising a box-shaped element (88) and a removable cover (95), wherein a tight seal gasket (96) is arranged between said removable cover (95) and said box-shaped element (88).

83. Containment box according to claim 82, wherein said removable cover (95) is associated with a power supply unit of the instrumentation kit (10).

84. Containment box according to claim 83, comprising a second box-shaped element (87) forming a space for containing at least one second component of the instrumentation kit (10).

85. Containment box according to claim 82, wherein said second box-shaped element has an opening defined by an outer peripheral edge (85) having a shape such as to fit to a tube of a frame (35) of said bicycle (1).

86. Containment box according to claim 85, comprising a gasket (86) at said outer peripheral edge (85) such as to make a tight seal between the outer peripheral edge (85) and the tube of said frame (35).
